(19) Europäisches Patentamt

**European Patent Office**

**Office européen des brevets**

(11) Veröffentlichungsnummer: **0 303 018 B1**

(12) **EUROPÄISCHE PATENTSCHRIFT**

(45) Veröffentlichungstag der Patentschrift: **07.10.92**

(21) Anmeldenummer: **88109500.4**

(22) Anmeldetag: **15.06.88**

(51) Int. Cl.⁵: **B60J 7/12**

(54) **Klappverdeck für ein Cabriolet oder dergleichen Kfz.**

(30) Priorität: **08.08.87 DE 3726428**

(43) Veröffentlichungstag der Anmeldung:
**15.02.89 Patentblatt 89/07**

(45) Bekanntmachung des Hinweises auf die
Patenterteilung:
**07.10.92 Patentblatt 92/41**

(84) Benannte Vertragsstaaten:
**DE ES FR GB IT**

(56) Entgegenhaltungen:
**DE-C- 871 699**
**US-A- 2 708 137**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Stahmer, Michael**
**Wilhelmstrasse 39**
**W-8000 München 40(DE)**
Erfinder: **Bolte, Ludwig**
**Keltenstrasse 22**
**W-8011 Kirchheim(DE)**
Erfinder: **Krieg, Heinrich**
**Kleinsenget 4**
**W-8391 Neureichenau(DE)**

Rank Xerox (UK) Business Services

## Beschreibung

Die Erfindung bezieht sich auf ein Klappverdeck der im Oberbegriff des Patentanspruchs 1 genannten Art, welche aus der US-A-27 08 137 hervorgeht.

Das aus dieser Druckschrift bekannte Cabriolet-Verdeck hat eine von querverlaufenden Bügeln des Verdeckgestells getragene sowie aus einem Textilgewebe gefertigte Innenverkleidung, die aus einem Mittelteil und zwei sich einteilig an dieses anschließende Seitenteilen besteht. Diese sind an ihren beiden freien Randbereichen über schlaufenartige Randstreifen und diese durchsetzende Haltestangen am obenliegenden Rand der beiden Seitenfenster befestigt. Dabei stehen die schlaufenartigen Randstreifen mit den Seitenteilen jeweils über einen Reißverschluß in Verbindung. Durch die einteilig ausgebildete Innenverkleidung entsteht in dieser beim Zusammenfalten des Klappverdecks im Übergangsbereich vom Mittelteil zu den Seitenteilen eine starke Faltenbildung, durch die sich in der Innenverkleidung unschöne Ausbeulungen und bleibende Falten bilden können.

Aufgabe der Erfindung ist es daher, die Innenverkleidung eines Klappverdecks der im Oberbegriff des Patentanspruchs 1 genannten Art derart auszubilden, daß sich bei seinem Verschwenken zwischen den rückwärtigen seitlichen Randbereichen des Mittelteils und den angrenzenden Seitenteilen ein etwa parallel verlaufender sowie in einer Vertikalebene liegender Faltenwurf bildet.

Zur Lösung der Aufgabe sind die im kennzeichnenden Teil des Patentanspruchs 1 dargelegten Merkmale vorgesehen.

Durch die erfindungsgemäße Teilung der Innenverkleidung des Klappverdecks in ein Mittelteil und zwei an dieses angrenzende Seitenteile, die ihrerseits an den Spannstangen längsverschiebbar angeordnet sind, ist gewährleistet, daß beim Verschwenken des Klappverdecks zwischen den seitlichen Randbereichen des Mittelteils und den angrenzenden Seitenteilen ein etwa in einer Vertikalebene liegender Faltenwurf entsteht. Durch diesen gehen die aneinander angrenzenden Randbereiche von Mittelteil und Seitenteilen optisch einwandfrei ineinander über, wobei in Schließstellung des Klappverdecks in den Übergangsbereichen der drei Teile lediglich eine kaum störende Trennaht sichtbar ist. Dabei ist vor allem eine Zerstörung der Innenverkleidung durch das Übertotpunktgestänge ausgeschlossen.

Die erforderliche Längsverschiebbarkeit der Seitenteile an den Spannstangen wird am zweckmäßigsten durch mehrere, im Abstand voneinander liegende Halteschlaufen erreicht, welche die Spannstangen jeweils umgeben und über Druckknöpfe oder dergleichen lösbare Befestigungsmittel an den Seitenteilen angebracht sind (Merkmale der Patentansprüche 2 und 3).

Die Breitenerstreckung des Mittelteils ist derart bemessen, daß es mit seinen seitlichen, untenliegenden Randabschnitten den obenliegenden Randbereich der Seitenteile überlappt, wodurch die Befestigungsanordnung der Seitenteile unsichtbar ist. Die Randabschnitte des Mittelteils weisen ferner im Bereich der Seitenteile einen aus Kunststoff oder Metall bestehenden Verstärkungsstreifen auf, durch den vorteilhafterweise ein flatterfreies und optisch einwandfreies Überlappen von Mittelteil und Seitenteilen gewährleistet ist (Merkmale des Patentanspruchs 4).

Ein Ausführungsbeispiel der Erfindung ist in der Zeichnung dargestellt und wird im folgenden erläutert. Es zeigt:

Fig. 1 ein Klappverdeck in Schließstellung in einer Seitenansicht,

Fig. 2 einen Teilschnitt längs der Linie II-II in Fig. 1 in größerer Darstellung.

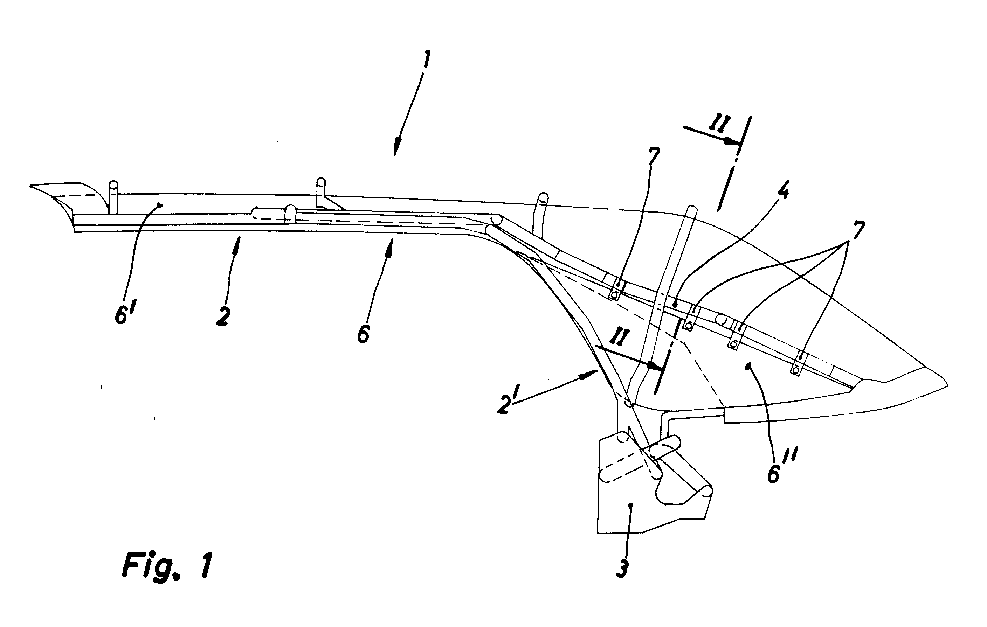

Das in Fig. 1 in aufgeklapptem Zustand dargestellte Klappverdeck 1 ist über ein Verdeckgestänge 2 an der nur bereichsweise dargestellten Karosserie 3 eines Cabriolets schwenkbar gelagert, wobei das Klappverdeck 1 einen Außenbezug aufweist. An den beiden rückwärtigen Eckbereichen des Verdeckgestänges 2 ist jeweils ein Übertotpunktgestänge $2'$ vorgesehen, das mit einer innenliegenden Spannstange 4 versehen ist. Diese werden beim Verschwenken des Klappverdecks 1 etwa in einer Vertikalebene verschwenkt.

Das Verdeckgestänge 2 trägt auf seiner dem Fahrzeuginnenraum zugewandten Innenseite eine aus einem Textilgewebe bestehende Innenverkleidung 6, die aus einem Mittelteil $6'$ und zwei rückwärtigen, an dieses angrenzende Seitenteile $6''$ besteht. Das Mittelteil $6'$ erstreckt sich dabei einstückig zwischen dem vorderen und rückwärtigen Rand des Verdeckgestänges 2 und ist an seinem vorderen Bereich über wenigstens zwei aus Gummizüge oder dergleichen bestehende Faltenwerfer oder andere Befestigungsmittel mit dem Außenbezug verbunden. Hierdurch erfolgt die Faltenwerfung des Außenbezugs parallel zum Mittelteil $6'$. Ferner kann die Innenverkleidung 6 an Randbereichen durch Spanndrähte oder dergleichen am Verdeckgestänge 2 angebracht sein, wodurch sie bedarfsweise, insbesondere im Reparaturfall, rasch und unkompliziert demontiert werden kann.

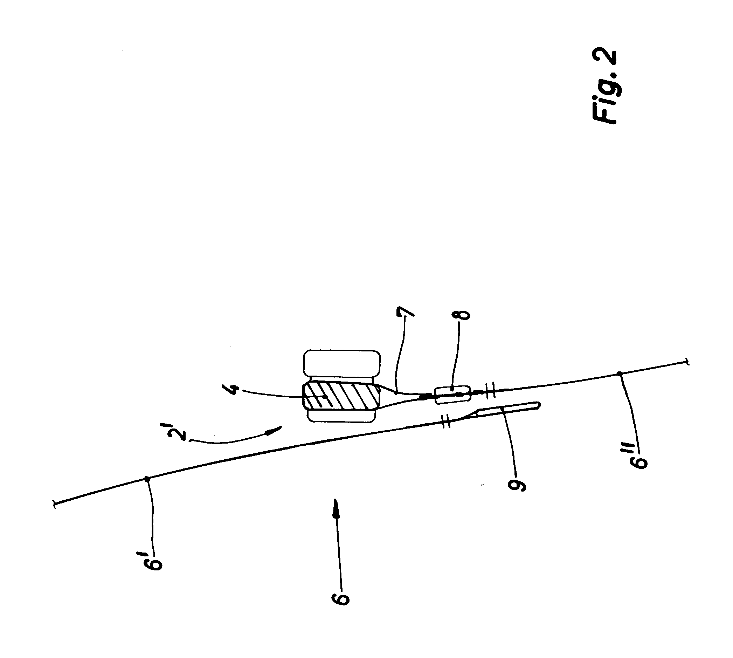

Die an den rückwärtigen Eckbereichen des Übertotpunktgestänges $2'$ vorgesehenen, dieses überdeckende sowie aus dem gleichen Textilgewebe wie das Mittelteil $6'$ bestehenden Seitenteile $6''$ sind jeweils über vier im Abstand voneinander liegende Halteschlaufen 7 von der Spannstange 4 getragen. Wie in den Fig. 1 und 2 ersichtlich, umgeben dabei die Halteschlaufen 7 die Spannstange 4 U-förmig und sind an ihren untenliegenden Endabschnitten jeweils über Druckknöpfe 8 an den Seitenteilen 6″ befestigt, so daß diese behinderungsfrei längs den Spannstangen 4 verschiebbar sind. Das Mittelteil 6′ überlappt mit seinen beiden seitlichen Randabschnitten die Spannstangen 4 und die Halteschlaufen 7, so daß hierbei in optisch vorteilhafter Weise die Befestigung der Seitenteile 6″ an den Spannstangen 4 unsichtbar ist. Im Bereich der Seitenteile 6″ ist das Mittelteil 6′ an seinen beiden gegenüberliegenden Randabschnitten jeweils mit einem aus Gummi, Kunststoff oder Metall bestehenden Verstärkungsstreifen 9 versehen, durch den aufgrund einer geringfügigen Gewichtserhöhung gewährleistet ist, daß in Schließstellung des Klappverdecks 1 das Mittelteil 6′ die beiden Seitenteile 6″ zuverlässig überlappt (Fig. 2).

Da die Seitenteile 6″ erfindungsgemäß über die Halteschlaufen 7 an den Spannstangen 4 längsverschiebbar angeordnet sind, werden sie längs diesen sowohl beim Hochschwenken des rückwärtigen Bereichs des Klappverdecks 1 als auch bei dessen Zusammenfalten verschoben, so daß eine Zerstörung der Innenverkleidung 6 im Bereich des Übertotpunktgestänges 2′ ausgeschlossen ist. Beim Verschwenken des Klappverdecks 1 werden dabei die Randbereiche des Mittelteils 6′ und der Seitenteile 6″ etwa in parallelen Ebenen zueinander verlagert, wobei in Schließstellung des Klappverdecks 1 das Mittelteil 6′ hauptsächlich durch den Verstärkungsstreifen 9 flatterfrei und in optisch vorteilhafter Weise an den Seitenteilen 6″ anliegt.

## Patentansprüche

1. Klappverdeck (1) für ein Cabriolet oder dergleichen Kraftfahrzeug, mit einem Verdeckgestell (2), das neben querverlaufenden Bügeln und/oder Spriegeln zwei Seitengestänge mit überwiegend in Längsrichtung verlaufenden und untereinander gelenkig verbundenen Gestängeteilen (Spannstangen 4, Lenker) aufweist und ferner einer Innenverkleidung (6) mit mindestens einem von den Spriegeln und/oder Bügeln getragenen Mittelteil (6') und zwei Seitenteilen (6"), dadurch gekennzeichnet, daß die Innenverkleidung (6) des Klappverdecks (1) in ein Mittelteil (6') und zwei an dieses angrenzende Seitenteile (6") aufgeteilt ist und daß diese von jeweils einem der seitlichen Gestängeteile (Spannstangen 4) längsverschiebbar getragen sind.

2. Klappverdeck nach Anspruch 1, dadurch gekennzeichnet, daß die Seitenteile (6") über wenigstens zwei, im Abstand voneinander liegende Halteschlaufen (7) von den längsverlaufenden Gestängeteilen (Spannstangen 4) getragen sind.

3. Klappverdeck nach Anspruch 2, dadurch gekennzeichnet, daß die Halteschlaufen (7) über Druckknöpfe (8) an den Seitenteilen (6") angebracht sind.

4. Klappverdeck nach Anspruch 1, dadurch gekennzeichnet, daß in Schließstellung des Klappverdecks (1) beide Seitenteile (6") von den Randabschnitten des Mittelteils (6') der Innenverkleidung (6) überlappt sind, wobei die Randabschnitte zumindest im Bereich der Seitenteile (6") mit einem Verstärkungsstreifen (9) versehen sind.

## Claims

1. A folding top (1) for a convertible or similar motor vehicle, comprising a frame (2) made up of transverse curved members and/or hoops and two side linkages made up of mainly longitudinal, pivotably interconnected parts (tie rods 4 and guide rod) and also comprising an inner lining (6) having at least one middle part (6') and two side parts (6") supported by the hoops and/or curved members, characterised in that the inner lining (6) of the folding top (1) is divided into a middle part (6') and two adjacent side parts (6") and the side parts are each longitudinally movable on a respective part of the linkage (tie rods 4).

2. A folding top according to claim 1, characterised in that the side parts (6") are supported by the longitudinal linkage parts (tie rods 4) via at least two spaced-apart retaining loops (7).

3. A folding top according to claim 2, characterised in that the retaining loops (7) are attached to the side parts (6") by press fasteners (8).

4. A folding top according to claim 1, characterised in that, when the folding top (1) is in the closed position, the edge portions of the middle part (6') of the inner lining (6) overlaps the two side parts (6"), and the edge portions have a reinforcing strip (9) at least in the region of the side parts (6").

## Revendications

1. Toit pliant (1) pour un cabriolet ou véhicule analogue, avec une tringlerie de toit (2) qui comporte outre des équerres transversales et/ou des arceaux, deux tiges latérales avec des pièces de tringlerie (tiges de tension 4, bras oscillant) articulées et s'étendant essentiellement longitudinalement, et en outre avec un revêtement interne (6) ayant au moins une pièce médiane (6') portée par les arceaux et/ou les équerres, et deux pièces latérales (6"), caractérisé en ce que le revêtement interne (6') du toit pliant (1) se compose d'une pièce médiane (6') et de deux pièces latérales (6") qui s'y raccordent, et en ce que chacune de celles-ci est portée en coulissement possible longitudinal par une pièce de tringlerie latérale (tige de tension 4).

2. Toit pliant selon la revendication 1, caractérisé en ce que les pièces latérales (6") sont portées par l'intermédiaire d'au moins deux boucles de maintien (7) disposées à intervalle, par des pièces de tringlerie s'étendant longitudinalement (tiges de tension 4).

3. Toit pliant selon la revendication 2, caractérisé en ce que les boucles de maintien (7) sont fixées sur les pièces latérales (6") par des boutons pressions (8).

4. Toit pliant selon la revendication 1, caractérisé en ce qu'en position fermée du toit pliant (1) les deux pièces latérales (6") sont recouvertes par les domaines de bord de la pièce médiane (6') du revêtement interne (6), les domaines de bord étant munis au moins dans le domaine des pièces latérales (6") d'une bande de renfort (9).

Fig. 1

EP 0 303 018 B1

Fig. 2